(19)

**Europäisches Patentamt**

**European Patent Office**

**Office européen des brevets**

(11) **EP 4 711 965 A1**

(12) **EUROPEAN PATENT APPLICATION**

(43) Date of publication:
18.03.2026 Bulletin 2026/12

(21) Application number: 24202906.4

(22) Date of filing: 26.09.2024

(51) International Patent Classification (IPC):
$G06F\ 21/75^{(2013.01)}$    $G06F\ 1/28^{(2006.01)}$
$G06F\ 1/30^{(2006.01)}$    $H03K\ 19/17768^{(2020.01)}$
$G01R\ 19/165^{(2006.01)}$    $G01R\ 31/40^{(2020.01)}$

(52) Cooperative Patent Classification (CPC):
G01R 19/16566; G01R 31/40; G06F 1/28;
G06F 1/30; G06F 21/71; G06F 21/755

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.09.2024 CN 202411280874

(71) Applicant: NXP B.V.
5656 AG Eindhoven (NL)

(72) Inventor: Wan, Chao
5656AG Eindhoven (NL)

(74) Representative: Colaiuda, Antonella
NXP Semiconductors Germany GmbH
Intellectual Property Group
Beiersdorfstraße 12
22529 Hamburg (DE)

(54) **SUPPLY GLITCH DETECTOR CIRCUIT AND METHOD FOR GLITCH DETECTION**

(57) A glitch detection circuit (200) is arranged detect a glitch on a digital supply (150) and comprises a glitch sense threshold generator (132), a path delay circuit (133) comprising two parallel paths, wherein the first path provides a first output of a slow signal path of the digital supply to be detected that is used as a positive glitch threshold signal (530) and the second path provides a second output of a slow signal path of the digital supply to be detected that is used as a negative glitch threshold signal (540). A comparator circuit (134) is arranged to compare the digital supply to be detected with the first output of a slow signal path and the second output of a slow signal path; wherein the output of the comparator circuit indicates a power glitch on the digital supply in response to the positive or negative glitch threshold signals.

FIG. 2

EP 4 711 965 A1

## Description

<u>Technical Field</u>

The technical field relates to a supply glitch detection circuit and method for supply glitch detection. The technical field is applicable to, but not limited to, power supply glitch detection circuit to identify hackers.

<u>Background</u>

A hacker is a person who breaks into a computer system or device, typically to create problems to the computer system or device user. The reasons for hacking are manyfold, e.g., installing malware, stealing or destroying data, disrupting service, etc. A known type of hacker attack is one in which the hacker injects a sudden power glitch on a logic supply of the computer system or device. This power injection is applied to cause the computer system or device to operate incorrectly, as a result of the attack. Thus, often a sudden power glitch applied to a logic power supply is designed intentionally, which causes a negative impact on the computer system or device being able to work in a stable and reliable manner.

In some instances, such a hack allows an attacker to tamper with the desired control flow of the computer system or device, for example, skipping instructions, influencing a branch decision, corrupting memory locations, or altering the result of an instruction or its side effects. Sometimes, a hacker may apply repetitive power supply glitches with different glitch shapes to cause problems by creating one or more of these effects. Thus, hacking is well-known problem and any technique to identify a hack, or an intended sudden power glitch on a (digital) logic supply of the computer system or device, is desirable.

US7085979B2 discloses a power glitch detection circuit. The inventor has identified limitations in this document, in that it uses a single power supply when detecting the voltage supply (vdd) glitch. A resistor divider is used to generate the positive/negative glitch threshold. Accordingly, there is a need for an improved glitch detection circuit, and method for glitch detection.

<u>Summary</u>

Examples herein described provide a glitch detection circuit and method for glitch detection, as described in the accompanying claims. Specific examples are set forth in the dependent claims. These and other aspects will be apparent from and elucidated with reference to the examples described hereinafter.

According to a first aspect, there is provided a glitch detection circuit arranged to detect a glitch on a digital supply. The glitch detection circuit comprises: a glitch sense threshold generator arranged to generate a positive glitch threshold signal and a negative glitch threshold signal using the digital supply; a path delay circuit coupled to the glitch sense threshold generator and comprising a first path and a second path located in parallel, wherein the first path provides a first output of a slow signal path of the digital supply to be detected that is used as the positive glitch threshold signal and the second path provides a second output of a slow signal path of the digital supply to be detected that is used as the negative glitch threshold signal; and a comparator circuit coupled to the path delay circuit and arranged to receive the digital supply to be detected and respectively compare the digital supply to be detected with the first output of a slow signal path and the second output of a slow signal path. The output of the comparator circuit provides an indication a power glitch on the digital supply in response to a comparison by the comparator circuit of the digital supply to be detected with at least one of: the positive glitch threshold signal, the negative glitch threshold signal. In this manner, an improved glitch detection circuit is able to distinguish between, and identifies/detects, a normal supply ripple and a real hacker/attack glitch. Thus, examples herein described focus on a threshold-based approach whereby a larger threshold is set to identify a real hacker/attack glitch, whereas a lower threshold would indicate a normal supply ripple.

In some examples, the glitch sense threshold generator may include an amplifier comprising: a positive input port for receiving the digital supply to be detected; an output node connected to a resistance string; and a negative input port coupled to the amplifier output node via a feedback path and a portion of the resistance string, where the first path may be connected to the output node of the amplifier, and the second path may be connected to a node in the resistance string. In this manner, the glitch sense threshold generator is able to use the digital supply to be detected to create the positive glitch threshold signal and the negative glitch threshold signals.

In some examples, the glitch sense threshold generator and path delay circuit and comparator circuit may operate in a stable analog power domain, different to a digital domain that provides the digital supply. In this manner, the circuitry arranged to detect a glitch is not susceptible to the glitch of a hacker attacking a digital circuit that uses the digital supply.

In some examples, the comparator circuit may be arranged to determine a voltage crossover between the digital supply to be detected and the at least one of: the positive glitch threshold signal, the negative glitch threshold signal wherein the voltage crossover may indicate a power glitch on the digital supply. In this manner, the comparator circuits may be able to identify a level and/or duration of a glitch based on the time taken to identify a voltage crossover and the return voltage crossover to a steady state, thereby assisting a determination as to whether the glitch is a normal ripple, or a power switch or due to a hacker.

In some examples, the comparator circuit may include two fast path/slow path comparators in parallel, wherein a first fast path/slow path comparator may compare the digital supply to be detected with the positive glitch threshold signal, and a second fast path/slow path comparator may compare the digital supply to be detected with the negative glitch threshold signal. In this manner, the comparator circuits may be able to identify whether the glitch is on a ramp-up or ramp down of the digital supply, based on the respective comparator comparing a negative glitch threshold signal or a positive glitch threshold signal.

In some examples, an output of the comparator circuit may be coupled to a set-reset, SR, latch circuit arranged to receive an output from the comparator circuit on a 'set' input that may indicate a detected power glitch on the digital supply to be detected and an output SR latch circuit maintains the indication until a reset signal is applied to a reset input on the latch circuit. In this manner, the circuit is able to store an occurrence of the glitch, irrespective of whether or not the glitch has subsequently disappeared (until the SR latch is reset).

In some examples, the output of the SR latch circuit may be coupled to a level shift circuit arranged to convert an output of the latch circuit from an analog domain signal to a digital domain output signal that is processed digitally. In some examples, the level shift circuit may include a first level shifter coupled to the first parallel path and a second level shifter coupled to the second parallel path wherein an output of the first level shifter and an output of the second level shifter may be connected to an interrupt logic 'OR' gate circuit that outputs a glitch detection indication that appears on either of the parallel paths. In this manner, the circuit is able to convert the glitch indication into a digital signal to be more readily processed by (e.g., higher level) digital circuits and digital signal processors.

In some examples, glitch sensitivity may be trimmed by changing the voltage on at least one of: the output node of the amplifier, the node in the resistance string. In some examples, the resistance string may include: a first resistance string, R1, connecting the output of the amplifier to the feedback path a second resistance, R2, connecting the first resistance string, R1, with the node and a third resistance string, R3, located between the node and ground, wherein R1 and R3 are trimmable. In some examples, the first resistance string, R1, may include a plurality of resistances coupled in parallel with a first plurality of selectable bypass switches and third resistance string, R3, may include a plurality of third resistances coupled in parallel with a second plurality of selectable bypass switches, wherein the glitch sensitivity is trimmed by selectably inserting into or removing at least one resistance from the plurality of first resistances or third resistances from the respective resistance strings. In this manner, the trimming of the resistors to provide an accurate positive glitch threshold signal and negative glitch threshold signal may be achieved by simply switching one or more bypass routes into the above circuit, thereby removing a resistance from the circuit and adapting the voltages set for the thresholds.

In some examples, the positive glitch threshold signal may be defined by:

$$\mathrm{V}(positive\_threshold) = \mathrm{V}(\mathrm{vdd\_digital})/(R2+R3)*(R1+R2+R3) \qquad [1]$$

and the negative glitch threshold signal may be defined by:

$$V(negative\_threshold) = vdd\_digital * R3/(R2+R3) \qquad [2]$$

In some examples, the path delay circuit may include a resistance-capacitance, R-C, low pass filter in each of the parallel paths. In this manner, a simple mechanism may be used to initiate a slower path and therefore a timing difference between a fast path that carries the digital supply and the slower paths that impart the glitch thresholds.

According to a second aspect, there is provided a method for glitch detection on a digital supply. The method comprises: receiving a digital supply to be detected; generating a positive glitch threshold signal using the digital supply to be detected and routing the positive glitch threshold signal on a first slow signal path; and generating a negative glitch threshold signal using the digital supply to be detected and routing the negative glitch threshold signal on a second slow signal path that is located parallel to the first slow signal path. The method further comprises: delaying the positive glitch threshold signal and negative glitch threshold signal in each slow signal path. The method further comprises: comparing the digital supply to be detected with the delayed positive glitch threshold signal on the first slow signal path; comparing the digital supply to be detected with the delayed negative glitch threshold signal on the second slow signal path; indicating a power glitch on the digital supply in response to the comparing operation.

Brief description of the drawings

Further details, aspects and examples will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates a simplified Voltage buffer circuit that is used to generate a positive glitch threshold signal and a negative glitch threshold signal, according to some examples.

FIG. 2 illustrates a circuit diagram of an example of the circuit arrangement comprising a glitch sense threshold generator, fast path/slow path comparators, warning latches, level shifters and an interrupt OR gate, according to some examples.

FIG. 3 illustrates example voltage waveforms on the fast path/slow path comparators in the circuit of FIG. 2, according to some examples.

FIG. 4 illustrates an example timing diagram of signals in the circuit of FIG. 2, according to some examples.

FIG. 5 illustrates a resistance arrangement to generate trimmable threshold voltages in the circuit of FIG. 2, according to some examples.

FIG. 6 illustrates a flowchart of a supply glitch detection approach, according to some examples.

Detailed description

The inventor has recognized and appreciated that there is no ideal voltage supply in real world circuit designs, as there are always glitches/ripples on logic power supply. Hence, the inventor has recognized and appreciated that it is important to distinguish between and identify/detect a normal supply ripple and a real hacker/attack glitch. Thus, examples herein described focus on a threshold-based approach whereby a larger threshold is set to identify a real hacker/attack glitch, whereas a lower threshold would indicate a normal supply ripple.

Furthermore, in some examples, for example, when logic is performing some heavy processing/ calculations, it is know that the current flow increases. Here, the ripple/glitch on the logic power supply also increases. Hence, in some application examples, as it may be more difficult to distinguish between a normal (large) logic supply ripple and a hacker attack, some examples propose a mechanism to perform a sensitivity trim of the detection circuits.

Examples herein described propose to implement a fast path and a slow path, operational in parallel, in order to conduct the same positive or negative edge to determine the impact of the logic supply glitch. Furthermore, the impact of the determined logic supply glitch is performed in another (and stable) power domain. In this example, a comparison is made to determine if there is a time that the determined voltage on fast path crosses the determined voltage on slow path. In some examples, the outcome of the glitch attack is stored by the latches. Thus, in this manner, even though the determined digital voltages (vdd_digital) may disappear after a long period of time, the determination made is stored in the latches until they are reset. Furthermore, it is envisaged in some examples, that the glitch sensitivity may be trimmed by changing the voltage on the slow paths for the positive glitch threshold signal and the negative glitch threshold signal.

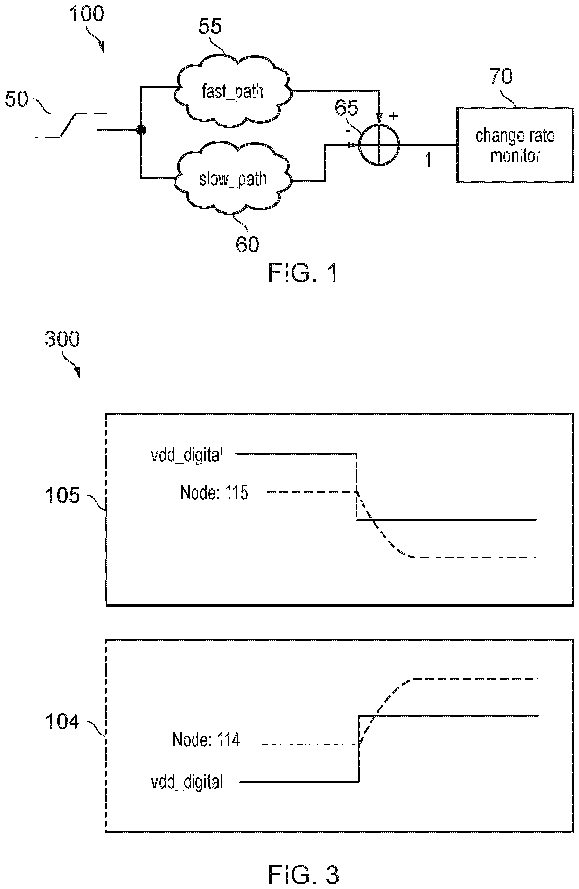

Referring now to FIG. 1, a simplified overview of a parallel path approach 100 is illustrated, according to some examples. Here, a logic power supply 50 that may be subject to a power supply glitch attack is provided to two paths in parallel. A first fast path 55 is configured to provide a quick determination of the logic power supply 50 and a second slow path 60, which includes one or more delay components, elements or circuits, is configured to provide a slow determination of the logic power supply 50. At a high level, these two paths are processed in any suitable manner, for example subtracted in subtraction logic 65. The result of this comparison (e.g., subtraction) may be provided to a signal processor 70 arranged to monitor a rate of change in the logic power supply 50, as a result of the logic power supply 50 being passed through the two different paths (i.e., one fast path and one slow path) in parallel.

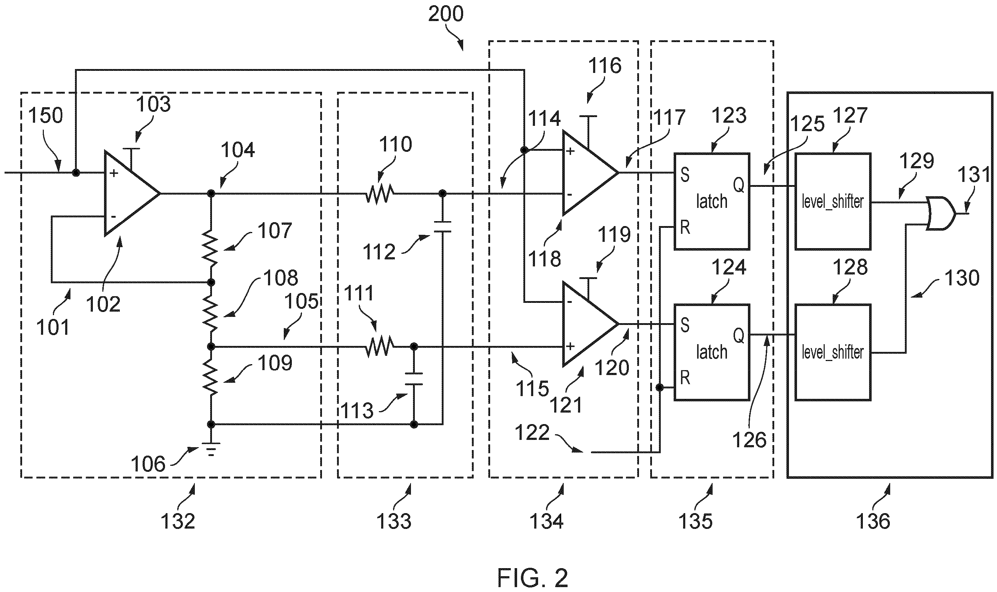

Referring now to FIG. 2, a circuit diagram 200 of an example of the circuit arrangement comprising a glitch sense threshold generator, fast path/slow path comparators, warning latches, level shifters and an interrupt OR gate, according to some examples. The example circuit diagram 200 includes a glitch sense threshold generator 132, a path delay circuit 133, which in this example includes low pass filters in two parallel paths. The two parallel paths are coupled to a comparator circuit 134, which in this example includes two fast path/slow path comparators 118, 121, latch circuit 135. The latch circuit 135 is connected to a level shift circuit 136 comprising respective level shifters (one for each parallel path) and an interrupt logic 'OR' gate 131.

Notably, there are two supply voltage domains in the example circuit diagram 200 of FIG. 2. A first supply voltage domain includes a digital supply 150 to be detected/protected. In some examples, it is envisaged that this supply may power most of a digital cell on a system-on-chip (SOC). If there is a voltage glitch attack on this supply, i.e., a large glitch for a significant-enough period of time, examples herein described will record this attack and latch a logic '1' at interrupt, output from logic 'OR' gate 131. As illustrated in FIG. 2, a 'positive_detected' signal 129, a 'negative_detected' signal 130 and a 'glitch_detected_interrupt' signal output from logic 'OR' gate 131 each belong to this first supply voltage domain.

A second supply voltage domain, which may be considered as a 'safe voltage supply domain' as it will generally not be subjected to the same digital logic supply voltage hacker attack, may in some examples be an analog supply domain. This may be considered a 'safe voltage supply domain' as hackers are generally concerned more about the digital circuits. except for digital supply 150. Although examples are described with the 'safe voltage supply domain' being an analog supply domain, it is envisaged that any other domain may be used. The focus here is that the inventor has recognised and appreciated that it is extremely hard to concurrently attack two domains, to make them crash together at the same instance in time. Indeed, it is envisaged in some examples that, say, domain 'A' may be used to monitor domain 'B', and then domain 'B' may be used to concurrently monitor domain 'A'. The analysis of this monitoring, say performed by specialist security logic, may yield a warning, once any circuit running off domain 'A' or domain 'B' crashes.

In the example circuit diagram 200 of FIG. 2, the second supply voltage (safe) domain is applied to all other nodes other than the aforementioned a 'positive_detected' signal 129, a 'negative_detected' signal 130 and a 'glitch_detected_interrupt' signal output from logic 'OR' gate 131 that each belong to this first supply voltage domain.

In the example circuit diagram 200 of FIG. 2, the digital supply 150 to be detected is applied to a positive input port of an amplifier 102, with analog supply 103, in a glitch sense threshold generator 132. The output of amplifier 102 is connected to a node 104, which is also connected to a resistance string (R1) 107, (R2) 108 and (R3) 109. A feedback path 101 is connected to amplifier 102's negative input port. and connected to the resistance string between R1 107 and R2 108. In some examples, and as a result of the large gain of amplifier 102, the voltage on feedback path 101 is nearly the same as the positive input port carrying the digital supply 150 to be detected.

In the circuit diagram 200 of FIG. 2, as the feedback path 101 is connected to the resistance string between R1 107 and R2 108, i.e., between a first node 104 at the output of the amplifier 102 and a second node 105, located between R2 108 and R3 109 (which is connected to ground 106), then the circuit provides:

$$V \text{ (at node 104)} > V \text{ (on f/b path 101)} = V \text{ (amp. digital supply 150)} > V \text{ (second node 105)} \qquad [3]$$

In this example, then V (at node 104) is chosen as the positive glitch threshold signal, whereas V (at second node 105) is chosen as the negative glitch threshold signal. Thus, the positive glitch threshold signal and negative glitch threshold signal are decided based on the resistance values of (R1) 107, (R2) 108 and (R3) 109.

In the example circuit diagram 200 of FIG. 2, the glitch sense threshold generator 132 is connected to path delay circuit 133, which in this example includes low pass filters (LPFs) in two parallel paths. Here, a first LPF connected to first node 104 (and therefore is the positive glitch threshold voltage) comprises fourth resistor 110 and first capacitor 112 as a first RC1 filter, which together act as an first LPF that provides a slow path for positive glitch. The output of this first LPF is connected to node 114, which is connected to the negative input port of a first fast/slow comparator 118. In this example, with a reasonable selection of values for fourth resistor 110 and first capacitor 112, the voltage on node 114 will follow the positive glitch threshold signal voltage on node 104, and the voltage on node 114 goes much slower than voltage on node 104.

A second LPF is connected to second node 105 (and therefore is the negative glitch threshold voltage) comprises fifth resistor 111 and second capacitor 113 as a second RC2 filter, which together act as a second LPF that provides a slow path for the negative glitch threshold signal. Thus, the input of this second LPF is the negative glitch threshold voltage. The output of this second LPF is connected to node 115, which is connected to the positive input port of a second fast/slow comparator 121. In this example, with a reasonable selection of values for fifth resistor 111 and second capacitor 113, the voltage on node 115 will follow the negative glitch threshold signal voltage on node 105, and the voltage on node 115 goes much slower than voltage on node 105.

In this manner, detecting a glitch attack is performed using two parallel paths. A positive edge detection uses the first path by comparing the digital supply 150 to be detected/ protected (i.e., vdd_digital) with a delayed (slower) version (due to the first LPF RC1 on the first path) of the same signal. A negative edge detection uses the second path by comparing the digital supply 150 to be detected/ protected (i.e., vdd_digital) with a delayed (slower) version (due to the second LPF RC2 on the second path) of the same signal. It is envisaged that the comparison to detect this difference, for example to determine if there is a time where the fast node and slow node cross each other, may be performed by respective comparators or other suitable logic circuits.

Referring now to FIG. 3, example voltage waveforms 300 on the fast path/slow paths in the circuit of FIG. 2 are illustrated, according to some examples. In this example, the voltage on node 114 in FIG. 2 will follow the positive threshold voltage on node 104, illustrated in FIG. 3, and the voltage on node 114 goes much slower than voltage on node 104. Similarly, in this example, the voltage on node 115 in FIG. 2 will follow the negative threshold voltage on node 105, and the voltage on node 115 goes much slower than voltage on node 105.

Referring back to the example circuit diagram 200 of FIG. 2, when there is sudden glitch with a fast slew rate, R1-R3 and C1-C2 respectively act as a low pass filter in each of the two parallel paths. Although this example illustrates the path delay circuit 133 as comprising R-C LPFs as the delay elements, it is envisaged that other signal delay circuits or components may be used in other envisaged circuit designs. Then the voltage at node 114 and the voltage at node 115 are the end of the slow path. The path delay circuit 133 that includes low pass filters in two parallel paths is connected to comparator circuit 134, which in this example includes two fast path/slow path comparators 118, 121. The digital supply 150 to be detected is connected to the positive input port of first comparator 118, as the fast voltage change path. The slow changing positive glitch threshold signal on node 114 is connected to the negative input port of first comparator 118. Thus, the first comparator 118 is always detecting whether there is a voltage cross-over between the digital supply 150 to be detected and the slow changing positive glitch threshold signal on node 114. When the example circuit of FIG. 2 operates without a glitch, the voltage at node 104 shall always be higher than the digital supply 150, ('vdd_digital'), due to:

$$V \text{ (at node 104)} = V \text{ (vdd\_digital)}/(R2+R3)*(R1+R2+R3) \qquad [4]$$

Thus, at these times, at the output 117 of the first comparator 118 is a logic '0'. However, when there is fast glitch/positive edge on the digital supply 150, ('vdd_digital'), there will be a time that V(vdd_digital) > V (at node 104). Once there is a fast positive edge on the digital supply 150, passed to the first comparator 118, the output 117 of the first comparator 118 cannot change fast, as it is influenced by the slow positive threshold voltage on node 114. Then, the digital supply 150 can also be larger than the voltage on node 114. Thus, here, there is a short time that, the first comparator output 117 outputs a logic '1'. This short pulse will be caught and recorded by the subsequent first SR latch 123 in latch circuit 135, where for first SR latch 123, a logic '1' on the 'S' port results in an output of a logic '1' on the 'Q' port. Thus, in this example, this logic '1' will remain there, until there is a reset signal on reset node 122.

Similarly, digital supply 150 to be detected is connected to the positive input port of second comparator 121, as the fast voltage change path. The slow changing negative glitch threshold signal on node 115 is connected to the positive input port of second comparator 121. Thus, the second comparator 121 is always detecting if there is a voltage cross-over between the digital supply 150 to be detected and the slow changing and the negative glitch threshold signal on node 115. Once there is a fast negative edge on the digital supply 150, passed to the second comparator 121, the output 120 of the second comparator 121 cannot change fast, as it is influenced by the slow negative glitch threshold signal on node 115. Then the digital supply 150 can also be smaller than the voltage on node 115. Thus, here, there is a short time that, the output 120 of second comparator 121 outputs a logic '1'. This short pulse will be caught and recorded by the subsequent second SR latch 124 in latch circuit 135. Similarly, for a positive latch on the second SR latch 124, the 'set' port is connected to the output 120 of second comparator 121 and when a fast negative edge is detected, there will be a logic '1' pulse seen on the output 120 of second comparator 121, applied to the 'set' port of the second SR latch 124. This logic '1' will make second latch output Q 126 a logic '1'. Thus, in this example, this logic '1' will remain there, until there is a reset signal on reset node 122.

In the example circuit diagram 200 of FIG. 2, the latch circuit 135 is connected to a level shift circuit 136 comprising respective level shifters (one for each parallel path) and an interrupt logic 'OR' gate 131. Here, the first latch output Q 125 keeps the positive glitch detection result. However, and notably in some examples, this circuit location (e.g., node) is under the 'safe' power domain, and is not influenced by a hack, or an intended sudden power glitch, on a digital logic supply directly. Thus, in this example, the first latch output Q 125 keeping the positive glitch detection result in the 'safe' power domain may subsequently be converted to a digital signal by first level shifter 127. With a positive glitch detection result, the first level shifter 127 is connected to the input port. then a digital domain signal 129 is available to be used by digital logic, such as logic 'OR' gate 131.

Similarly, the second latch output Q 126 keeps the negative glitch detection result. However, and notably in some examples, this circuit location (e.g., node) is under the 'safe' power domain, and is not influenced by a hack, or an intended sudden power glitch, on a digital logic supply directly. Thus, in this example, the second latch output Q 126 keeping the negative glitch detection result in the 'safe' power domain may subsequently be converted to a digital signal by second level shifter 128. With a negative glitch detection result, the second level shifter 128 is connected to the input port. then a digital domain signal 130 is available to be used by digital logic, such as logic 'OR' gate 131.

Typically, security policies care about 'whether there is a power supply glitch attack'. In contrast, examples herein described focus on 'whether there is a positive power supply glitch attack or a negative power supply glitch attack'. This focus enables a far more accurate assessment of a power supply glitch attack. Thus, in some examples, a logic 'OR' gate 131 is provided at the output of the example circuit diagram 200 of FIG. 2. In this manner, the detection results in a form of digital domain signals 129, 130 can be used for debug or test. In some examples, it is envisaged that other logic/gate circuits may be placed to process/handle the digital domain signals 129, 130 to facilitate users or applications being arranged or configured to ignore some glitch attack warnings in some instances. For example, it is envisaged that during the switching from a 'low power mode' to a 'high power mode', the 'positive power supply glitch' is expected. Thus, in this instance, some examples may just 'gate' the signal conduction digital domain signals 129, because these amplifiers, latches, comparators are operational under the safe power domain. In this manner, the glitch attack information/signals may be kept here safely, even the logic is hacked to crash. In this instance, so long as the logic circuits can recover after the power supply glitch attack, the security logic may become aware that it has been attacked. In this manner, the circuit's/application's security may be able to effect a solution to the power supply glitch, according its security policy, e.g., reset this analog glitch detector to make it ready for next round detection. In some examples, this reset signal 122 may be sent from an upper level circuit, for example identifying that the upper level circuit has received a glitch detection warning and implemented a suitable response. The received glitch detection may result in an action being needed to protect the device or circuit that is subject to the attack, dependent upon the exact output of the example circuit 200 of FIG. 2, such as ignore the warning (for example during power-up or power mode change where the supply voltage may be unstable and thus that the glitch detection warning may be a false one) or log the warning and reset, or shut down the device or circuit.

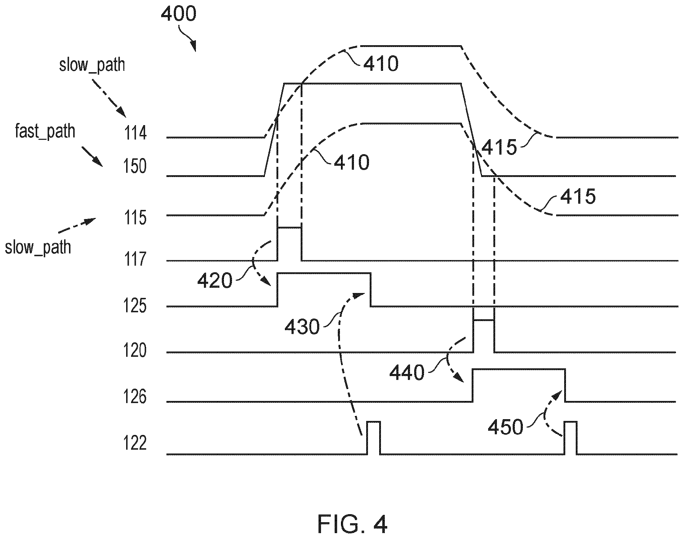

Referring now to FIG.4, an example timing diagram 400 of some of the signals in the circuit of FIG. 2 are illustrated, according to some examples. The digital supply 150 of FIG. 2 to be detected/ protected, i.e., the signal that is routed via the first path, is illustrated in the second waveform. The output of the first LPF connected to node 114 is illustrated in the first waveform on the first slow path, which is connected to the negative input port of a first fast/slow comparator 118, which is connected to the negative input port of a first fast/slow comparator 118 of FIG. 2. The output of the second LPF connected to node 115 is illustrated in the third waveform on the second slow path, which is connected to the positive input port of a second fast/slow comparator 121 of FIG. 2. As illustrated, due to the delay caused by the delay circuit, e.g., the R-C filters, the ramp up 410 and ramp down 415 of the respective signals on the slow paths, following the digital supply 150, creates a difference that can be monitored by the respective comparators 118, 121. These differences are illustrated in the pulses 420, 440, for example, the output 117 of the first comparator 118 illustrated in the fourth waveform and output 120 of the second comparator 121 illustrated in the sixth waveform. Notably, as illustrated, this fourth waveform cannot change fast 420, as it is influenced by the slow positive threshold voltage on node 114 in the first waveform. The output Q 125 of the first SR latch of FIG. 2 is a logic '1', which will remain 'high', until there is a reset signal 430 on reset node 122 (the eighth waveform). The output 120 of the second comparator 121 is illustrated in the sixth waveform, and this cannot change fast 440, as it is influenced by the slow negative glitch threshold signal on node 115 (the third waveform). Thus, as a consequence, the output of the second latch Q 126 is a logic '1' in the seventh waveform. Thus, in this example, this logic '1' will remain there, until there is a reset signal 450 on reset node 122 (the eighth waveform).

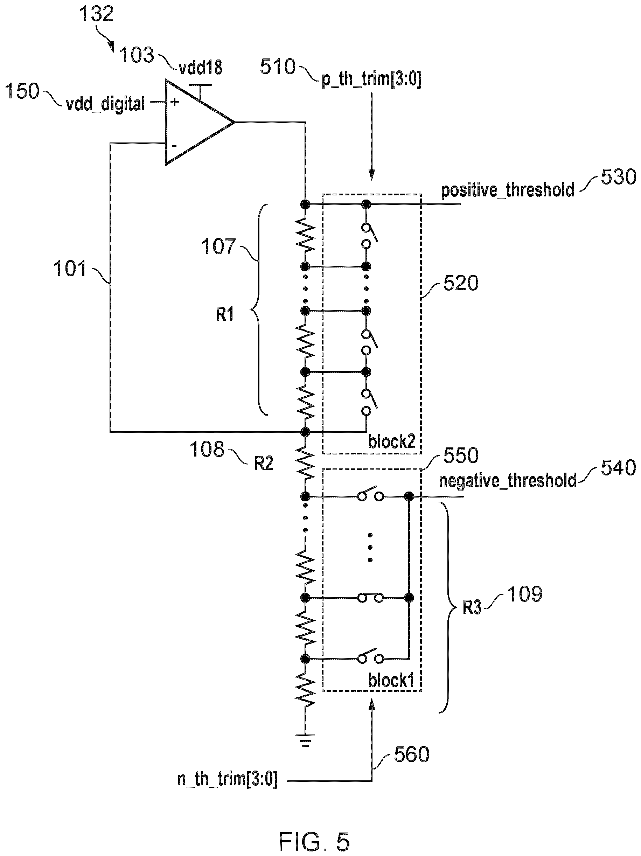

FIG. 5 illustrates one envisioned example of a resistance arrangement to generate trimmable threshold voltages within the glitch sense threshold generator 132 in the circuit of FIG. 2, according to some examples.

From equation [4] and the following equation [5], it is noted that there are three resistances related to, and able to influence, the threshold values. In some examples, it is better to trim the positive glitch threshold 530 and negative glitch threshold 540 independently, and for the trimming to be performed to trim values in a linear manner with threshold values.

$$V(negative\_threshold\ 540) = vdd\_digital * R3/(R2 + R3) \qquad [5]$$

Thus, in some examples, it is arranged that resistance string (R1) 107, and resistance string (R3) 109 are made trimmable, whilst maintaining a summation of second resistance (R2) 108 and resistance string (R3) 109 (i.e., R2+R3) as a constant value. Feedback path 101 maintains the voltage between resistance string (R1) 107 and second resistance (R2) 108 to be the same value as the digital supply 150 to be detected/protected (vdd_digital). Thus, resistance (R2) 108 and resistance string (R3) 109 are always in use, but a node selection is made from the combination of the resistance (R2) 108 and resistance string (R3) 109 to be used as the negative glitch threshold. In the glitch sense threshold generator 132 of FIG. 5, a first switch circuit 520 that includes a selectable by-pass route for each of the resistances in the first resistance string (R1) 107 to be independently connected and used to tap in and set a wide range of possible resistance values provided by the first resistance string (R1) 107. The setting of the first switch circuit 520, to trim a positive threshold glitch value, is controlled by control signal 510, for example arranged by a higher-level circuit, such as a signal processor (not shown). Similarly, a second switch circuit 550 includes a selectable by-pass route for each of the resistances in third resistance string (R3) 109 to be independently connected and used to tap in and set a wide range of possible resistance values provided by the third resistance string (R3) 109. The setting of the second switch circuit 550, to trim a negative threshold glitch value, is controlled by control signal 560, for example arranged by a higher-level circuit, such as a signal processor (not shown). In this manner, the circuit design may save a number of devices in a layout design that would otherwise be needed. In this manner, the voltage at node 114 (based on equation [4]) is used as the positive glitch threshold 530 as it is greater than the digital supply 150 to be detected/protected (vdd_digital) and the voltage at node 115 (based on equation [5]) is used as the negative glitch threshold 540 as it is less than the digital supply 150 to be detected/protected (vdd_digital).

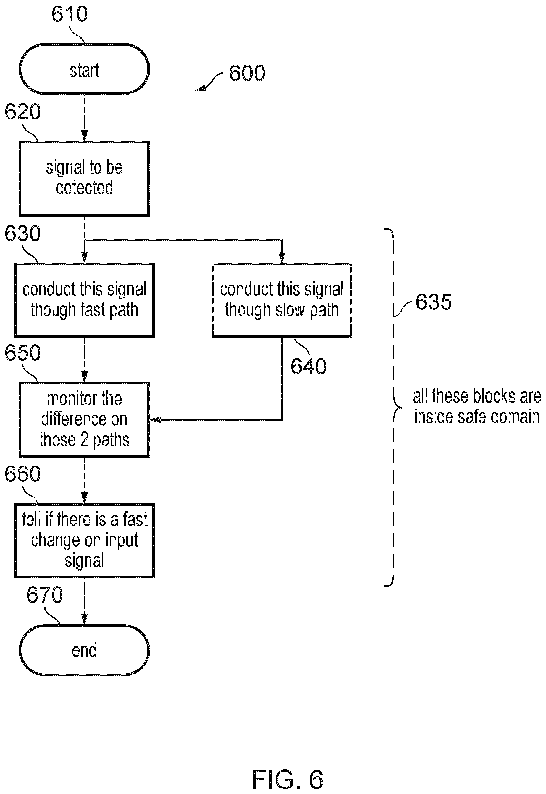

Referring now to FIG. 6, a flowchart 600 of a supply glitch detection approach is illustrated, according to some examples. The flowchart 600 starts at 610 and, at 620, a signal subject to a glitch attack is input that is to be detected. At this point, the signal subject to a glitch attack is applied to a first, fast path at 630 and applied to a second slow path at 640, as illustrated in FIG. 2. At 650, the two paths are compared/monitored to determine the difference between the signal subject to a glitch attack on a first fast path and the same signal on the second slow path. Subsequently, at 660, and based on the comparison at 650, it is possible to determine whether there is a fast or slow change on the input signal that is subject to a glitch attack. The flowchart ends at 670. Notably, most of the flowchart operations are performed inside a safe power supply domain at 635, for example an analog supply voltage, as described with reference to FIG. 2.

In comparison to the approach adopted in US7085979B2, which uses only a single power supply to detect the power supply (vdd) glitch, examples of the glitch detector circuit described herein propose to use another power domain (i.e., a digital power domain) to detect a supply glitch on an analog circuit, which will advantageously never be impacted by a glitch occurring on the vdd_digital line. Even if the supply glitch detection on the vdd_digital fades/disappears after a long period time, the attack information can also be maintained by the latches until the digital supply glitch detection circuit receives a reset signal.

In the examples described herein, a resistor divider is used to generate the positive/negative glitch threshold signals, which is in contrast to the teaching of US7085979B2 where a voltage buffer is used. Furthermore, in examples herein described, the R1 and R3 in the resistor divider are made trimmable in order to achieve different thresholds. In this manner, a processor is provided with an opportunity to use different detection sensitivity, in order to fit/adapt the circuit design to different working modes, for example, higher sensitivity for key processes, lower sensitivity for low power state (where the effect of any power ripple is sometimes larger at this time when the circuit is, say, in idle mode).

It is envisaged that the concepts herein described may be used to protect microchips from supply glitch attack, or the concepts may be used to detect fast edges on a circuit node.

In the foregoing specification, the description has been explained with reference to specific examples. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different examples may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative examples may include multiple instances of a particular operation, and the order of operations may be altered in various other examples. Also, for example in one example, the illustrated examples may be implemented as circuitry located on a single integrated circuit or within a same device. In some examples, the various components within the de-warp processor can be realized in discrete or integrated component form, with an ultimate structure therefore being an application-specific or design selection. As the illustrated examples may, for the most part, be implemented using electronic components and circuits known to those skilled in the art, details will not be explained in any greater extent than that considered necessary as illustrated below, for the understanding and appreciation of the underlying concepts and in order not to obfuscate or distract from the teachings thereof. A skilled artisan will appreciate that the level of integration of processor circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the description is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

1.   A glitch detection circuit (200) for detecting a glitch on a digital supply (150), the glitch detection circuit (200) comprising:

a glitch sense threshold generator (132) arranged to generate a positive glitch threshold signal (530) and a negative glitch threshold signal (540) using the digital supply (150);

a path delay circuit (133) coupled to the glitch sense threshold generator (132) and comprising a first path and a second path located in parallel, wherein the first path provides a first output of a slow signal path of the digital supply (150) to be detected that is used as the positive glitch threshold signal (530) and the second path provides a second output of a slow signal path of the digital supply (150) to be detected that is used as the negative glitch threshold signal (540); and

a comparator circuit (134) coupled to the path delay circuit (133) and arranged to receive the digital supply (150) to be detected and respectively compare the digital supply (150) to be detected with the first output of a slow signal path and the second output of a slow signal path;

wherein an output of the comparator circuit (134) provides an indication of a power glitch on the digital supply (150) in response to a comparison by the comparator circuit (134) of the digital supply (150) to be detected with at least one of: the positive glitch threshold signal (530), the negative glitch threshold signal (540).

2.   The glitch detection circuit (200) of Claim 1, wherein the glitch sense threshold generator (132) comprises an amplifier (102) comprising:

a positive input port arranged to receive the digital supply (150) to be detected;

an output node (104) connected to a resistance string (107, 108, 109); and

a negative input port coupled to the output node (104) of the amplifier (102) via a feedback path (101) and a portion of the resistance string (107, 108, 109);

wherein the first path is connected to the output node (104) of the amplifier (102), and the second path is connected to a node (105) in the resistance string (107, 108, 109).

3.   The glitch detection circuit (200) of Claim 1 or Claim 2, wherein the glitch sense threshold generator (132) and path delay circuit (133) and comparator circuit (134) operate in a stable analog power domain, different to a digital domain that provides the digital supply (150).

4.   The glitch detection circuit (200) of any preceding Claim, wherein the comparator circuit (134) is arranged to determine a voltage crossover between the digital supply (150) to be detected and the at least one of: the positive glitch threshold signal (530), the negative glitch threshold signal (540) wherein the voltage crossover indicates a power glitch on the digital supply (150).

5.   The glitch detection circuit (200) of any preceding Claim, wherein the comparator circuit (134) comprises two fast path/slow path comparators (118, 121) in parallel, wherein a first fast path/slow path comparator (118) compares the digital supply (150) to be detected with the positive glitch threshold signal (530), and a second fast path/slow path comparator (121) compares the digital supply (150) to be detected with the negative glitch threshold signal (540).

6. The glitch detection circuit (200) of any preceding Claim, wherein the output of the comparator circuit (134) is coupled to a set-reset, SR, latch circuit (135) arranged to receive the output from the comparator circuit (134) on a 'set' input that indicates a detected power glitch on the digital supply (150) to be detected and wherein an output of the SR latch circuit (135) maintains the indication until a reset signal (122) is applied to a reset input on the SR latch circuit (135).

7. The glitch detection circuit (200) of any preceding Claim, wherein the output of the SR latch circuit (135) is coupled to a level shift circuit (136) arranged to convert an output of the latch circuit (136) from an analog domain signal to a digital domain output signal that is processed digitally.

8. The glitch detection circuit (200) of Claim 7, wherein the level shift circuit (136) comprises a first level shifter (127) coupled to the first path and a second level shifter (128) coupled to the second path wherein an output (129) of the first level shifter (127) and an output (130) of the second level shifter (128) are connected to an interrupt logic 'OR' gate circuit (131) that outputs a glitch detection indication that appears on either of the first path or the second path.

9. The glitch detection circuit (200) of any of preceding Claims 2 to 8, wherein a glitch sensitivity of the glitch sense threshold generator (132) is arranged to be trimmed by changing a voltage on at least one of: the output node (104) of the amplifier (102), the node (105) in the resistance string (107, 108, 109).

10. The glitch detection circuit (200) of Claim 9, wherein the resistance string (107, 108, 109) comprises: a first resistance string, R1, (107) connecting the output node (104) of the amplifier (102) to the feedback path (101) a second resistance, R2, (108) connecting the first resistance string, R1, (107) with the node (105) and a third resistance string, R3, (109) located between the node (105) and ground, wherein R1 and R3 are trimmable.

11. The glitch detection circuit (200) of Claim 10, wherein the positive glitch threshold signal (530) is defined by:

$$V (positive\ threshold\ 530) = V (vdd\_digital)/(R2+R3)*(R1+R2+R3)$$

and the negative glitch threshold signal (540) is defined by:

$$V(negative\ threshold\ 540) = vdd_{digital} * \frac{R3}{R2+R3},$$

12. The glitch detection circuit (200) of Claim 10 or Claim 11, wherein the first resistance string, R1, (107) comprises a plurality of resistances coupled in parallel with a first plurality of selectable bypass switches (520) and the third resistance string, R3, (109) comprises a plurality of third resistances coupled in parallel with a second plurality of selectable bypass switches (520), wherein the glitch sensitivity is selectably trimmed by: insert at least one resistance from the plurality of first resistances or third resistances into a respective resistance string; remove at least one resistance from the plurality of first resistances or third resistances from the respective resistance string.

13. The glitch detection circuit (200) of any preceding Claim, wherein the path delay circuit (133) comprises a first resistance-capacitance, R-C, low pass filter in the first path of the parallel paths and second resistance-capacitance, R-C, low pass filter in the second path of the parallel paths.

14. A method of glitch detection (600) on a digital supply (150), the method comprising:

receiving a digital supply (150) to be detected;
generating a positive glitch threshold signal (530) using the digital supply (150) to be detected and routing the positive glitch threshold signal (530) on a first slow signal path;
generating a negative glitch threshold signal (540) using the digital supply (150) to be detected and routing the negative glitch threshold signal (540) on a second slow signal path that is located parallel to the first slow signal path;
delaying the positive glitch threshold signal (530) in the first slow signal path and delaying the negative glitch threshold signal (540) in the second slow signal path;
comparing the digital supply (150) to be detected with the delayed positive glitch threshold signal (530) on the first slow signal path;
comparing the digital supply (150) to be detected with the delayed negative glitch threshold signal (540) on the second slow signal path; and

identifying a glitch on the digital supply (150) in response to at least one comparing operation.

15. The method of glitch detection (600) on a digital supply (150) of Claim 14, wherein generating a positive glitch threshold signal (530), generating a negative glitch threshold signal (540), delaying the positive glitch threshold signal (530), delaying the negative glitch threshold signal (540) signal, comparing the digital supply (150) with the threshold signals are performed in a stable analog power domain, different to a digital domain that provides the digital supply (150).

100

55

fast_path

50

65

+

−

70

change rate
monitor

slow_path

1

60

FIG. 1

300

105

vdd_digital

Node: 115

104

Node: 114

vdd_digital

FIG. 3

FIG. 2

EP 4 711 965 A1

FIG. 4

FIG. 5

610

start

600

620

signal to be
detected

630

conduct this signal
though fast path

conduct this signal
though slow path

635

640

650

monitor the
difference on
these 2 paths

all these blocks are
inside safe domain

660

tell if there is a fast
change on input
signal

670

end

FIG. 6

Europäisches
Patentamt
European
Patent Office
Office européen
des brevets

# EUROPEAN SEARCH REPORT

**Application Number**

EP 24 20 2906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/137104 A1 (HEO DONGHUN [KR] ET AL) 5 May 2022 (2022-05-05) | 1-7,9-15 | INV. G06F21/75 |
| A | * abstract; claims 1-14, 17-23; figures 1-16 * <br> * paragraph [0004] - paragraph [0012] * <br> * paragraph [0031] - paragraph [0138] * <br> ----- | 8 | G06F1/28 <br> G06F1/30 <br> H03K19/17768 <br> G01R19/165 <br> G01R31/40 |
| X | US 2002/186053 A1 (EINFELDT WALTER [DE]) 12 December 2002 (2002-12-12) | 1-7,9-15 | |
| A | * abstract; claims 1-10; figures 1,2 * <br> * paragraph [0004] - paragraph [0025] * <br> * paragraph [0030] - paragraph [0051] * <br> ----- | 8 | |
| X | US 2023/213579 A1 (CHEN PIN-WEN [TW] ET AL) 6 July 2023 (2023-07-06) | 1-7,9-15 | |
| A | * abstract; claims 1-16; figures 1-7 * <br> * paragraph [0005] - paragraph [0016] * <br> * paragraph [0027] - paragraph [0050] * <br> ----- | 8 | |
| A,D | US 7 085 979 B2 (SAMSUNG ELECTRONICS CO LTD [KR]) 1 August 2006 (2006-08-01) * abstract; claims 1-18; figures 1-8 * <br> * column 2, line 16 - column 3, line 60 * <br> * column 4, line 25 - column 16, line 41 * <br> ----- | 1-15 | |

**TECHNICAL FIELDS SEARCHED (IPC)**

G06F
H03K
G01R

The present search report has been drawn up for all claims

| Place of search | Date of completion of the search | Examiner |
|---|---|---|
| Munich | 7 March 2025 | Nadal, Rafael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 2906

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | | Publication date | Patent family member(s) | | Publication date |
|---|---|---|---|---|---|
| US 2022137104 | A1 | 05-05-2022 | KR | 20220057840 A | 09-05-2022 |
| | | | US | 2022137104 A1 | 05-05-2022 |
| US 2002186053 | A1 | 12-12-2002 | DE | 10120142 A1 | 31-10-2002 |
| | | | JP | 2003021652 A | 24-01-2003 |
| | | | US | 2002186053 A1 | 12-12-2002 |
| US 2023213579 | A1 | 06-07-2023 | CN | 116400206 A | 07-07-2023 |
| | | | EP | 4209792 A1 | 12-07-2023 |
| | | | TW | 202344859 A | 16-11-2023 |
| | | | US | 2023213579 A1 | 06-07-2023 |
| US 7085979 | B2 | 01-08-2006 | CN | 1469131 A | 21-01-2004 |
| | | | DE | 10324875 A1 | 29-01-2004 |
| | | | FR | 2840429 A1 | 05-12-2003 |
| | | | JP | 4122257 B2 | 23-07-2008 |
| | | | JP | 2004007676 A | 08-01-2004 |
| | | | KR | 20030092777 A | 06-12-2003 |
| | | | US | 2003226082 A1 | 04-12-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7085979 B2